# EUROPÄISCHE PATENTSCHRIFT

(11) **EP 2 216 696 B1**
(45) Veröffentlichungstag und Bekanntmachung des Hinweises auf die Patenterteilung: **01.05.2013**
(21) Anmeldenummer: 10000398.7
(22) Anmeldetag: 18.01.2010
(51) Int. Cl.: G05B 19/05

(54) **Verfahren und Kommunikationssystem zum Konfigurieren eines einen Logikbaustein enthaltenden Kommunikationsmoduls**
Method and communication system for configuring a communication module containing a logic module
Procédé et système de communication pour la configuration d'un module de communication intégré dans un module logique

(30) Priorität: 19.01.2009 DE 102009005399
(43) Veröffentlichungstag der Anmeldung: 11.08.2010
(73) Patentinhaber: Phoenix Contact GmbH & Co. KG, 32825 Blomberg (DE)
(72) Erfinder: Kühnl, Claus Peter, 32584 Löhne (DE); Hellmann, Klas, 31787 Hameln (DE); Kalhoff, Johannes, 32825 Blomberg (DE); Meyer, Holger, 31855 Aerzen (DE); Krumsiek, Dietmar, 31860 Emmerthal (DE)
(74) Vertreter: Kampfenkel, Klaus

(56) Entgegenhaltungen:
- DE-A1- 4 205 524
- G. Lías, M.D. Valdéz, M.A. Domínguez, M.J, Mourne: "Implementing a Fieldbus Interface Using an FPGA" FPL 2000 2000, Seiten 175-180, XP002583438 Heidelberg Gefunden im Internet: URL:http://www.springerlink.com/content/j8 f1ec52908xcbgb/> [gefunden am 2010-05-20]

## Beschreibung

Die Erfindung betrifft ein Verfahren zum Konfigurieren eines einen Logikbaustein enthaltenden Kommunikationsmoduls zur zumindest teilweisen zyklusfreien Steuerung eines Kommunikationssystems, insbesondere eines Automatisierungssystems, sowie ein Kommunikationssystem zum Konfigurieren eines derartigen Kommunikationsmoduls.

Zur Steuerung von Prozessabläufen werden Automatisierungssysteme, zum Beispiel Feldbussysteme eingesetzt, bei denen in der Regel eine speicherprogrammierbare Steuerung (SPS) über einen Bus mit Sensoren und Aktoren verbunden ist, um den Prozess zu überwachen und zu steuern. Die Prozesssteuerung übernimmt beispielsweise ein zyklusorientiertes Steuerungsprogramm, welches in der Regel vom Hersteller als Betriebssystem fest in ein SPS-Gerät eingespeichert wird. Das zyklisch arbeitende Steuerungsprogramm ermittelt zunächst den Zustand aller an das SPS-Gerät angeschlossenen Sensoren und erstellt aus den ermittelten Daten ein Prozessabbild aller Eingänge des SPS-Gerätes. Danach gibt das zyklusorientierte Steuerungsprogramm die Steuerung an ein Anwenderprogramm ab. Das Anwenderprogramm ermittelt nunmehr aus dem Prozessabbild aller Eingänge ein Prozessabbild aller Ausgänge, das heißt die für die angeschlossenen Aktoren bestimmten Ausgangssignale. Danach übergibt das Anwenderprogramm die Steuerung der Anlage wieder dem Betriebssystem, das heißt dem zyklusorientierten Steuerungsprogramm. Das Steuerungsprogramm sorgt dafür, dass die ermittelten Ausgangssignale zu den jeweiligen Aktoren übertragen werden. Anschließend beginnt der Steuerzyklus von vorne.

Zum Bewältigen schneller Steuerungsvorgänge wird in DE 42 05 524 Al eine speicherprogrammierbare Steuerung beschrieben, die mindestens einen Logikbaustein mit einer internen verschaltung aufweist, über die mindestens ein Ausgang mit seinem korrespondierenden Eingang verbunden ist. Ferner wird in DE 42 05 524 Al ein Programmier-verfahren für einen derartigen Logikbaustein beschrieben, wobei der Logikbaustein in einer Baugruppe angeordnet ist, die über einen Bus mit einer Steuereinheit, mit weiteren Baugruppen, sowie weiteren Peripherieeinheiten verbunden sein kann. Von einem Programmiergerät aus kann der beispielsweise als FPGA ausgebildete Logikbaustein über die Zentraleinheit programmiert werden, wobei zu diesen Zweck ein zeitunkritischer und ein zeitkritischer Programmteil erstellt werden, wobei die Programmteile völlig unabhängig voneinander sind. Der zeitunkritische Programmteil wird in der Zentraleinheit abgespeichert und sequentiell abgearbeitet, während der zeitkritische Programmteil zur Ausführung durch den jeweiligen Logikbaustein an diesen übertragen wird.

Aus "Implementing a Fieldbus Interface Using an FPGA" von G. Lías, M.D. Valdéz, M.A. Dominguez und M.J. Mourne, FPL 2000, Seiten 175 bis 180, ist ferner die Verwendung eines FPGA für eine Feldbusschnittestelle bekannt.

Der vorliegenden Erfindung liegt die Aufgabe zugrunde, ein Verfahren sowie ein Kommunikationssystem zum Konfigurieren eines einen Logikbaustein enthaltenen Kommunikationsmoduls zu schaffen, welche eine flexible und schnelle Prozesssteuerung in einem Kommunikationssystem ermöglichen.

Ein Kerngedanke der Erfindung ist darin zu sehen, dass ein für eine speicherprogrammierbare Steuerungseinrichtung erstelltes zyklusorientiertes Steuerungsprogramm zumindest teilweise in einen Code umgewandelt wird, welcher von einem Logikbaustein eines Kommunikationsmoduls ausgeführt werden kann, so dass zumindest der umgewandelte Programmteil des zyklusorientierten Steuerungsprogramms zyklusfrei, ausgeführt werden kann. Zyklusfrei oder quasi zyklusfrei heißt, dass zumindest einige der implementierten Steuerungsaufgaben, Applikationsfunktionen und/oder Systemfunktionen parallel und somit schneller ausgeführt werden können, als dies bei Ausführung des zyklusorientierten Steuerungsprogramms der Fall wäre.

Das oben genannte technische Problem wird zum Einen durch die Verfahrensschritte des Anspruchs 1 gelöst.

Danach wird ein Verfahren zum Konfigurieren eines einen Logikbaustein enthaltenden Kommunikationsmoduls zur zumindest teilweisen zyklusfreien Steuerung eines Kommunikationssystems, insbesondere eines Automatisierungssystems zur Verfügung gestellt. Zunächst wird ein zyklusorientiertes Steuerungsprogramm, welches in einer speicherprogrammierbaren Steuerungseinrichtung zum zyklusorientierten Betrieb des Kommunikationssystems lauffähig ist, erzeugt. Ein zyklusorientiertes Steuerungsprogramm kann beispielsweise durch ein IEC 61131 Programmiersystem erstellt werden. Wenigstens ein Programmteil des zyklusorientierten Steuerungsprogramms wird in einen von einem Logikbaustein ausführbaren Code umgewandelt. Bei dem Logikbaustein kann es sich beispielsweise um einen FPGA (field programmable gate array) handeln. Der Code des umgewandelten Programmteils wird in einen Logikbaustein eines Kommunikationsmoduls, welches nachfolgend auch als Logikmodul bezeichnet wird, geladen. Der Logikbaustein des Kommunikationsmoduls führt dann unter Ansprechen auf den Code den entsprechenden Programmteil des zyklusorientierten Steuerungsprogramms zyklusfrei aus. Das Kommunikationsmodul fungiert in diesem Fall als Steuerungseinrichtung, welche zumindest einige der projektierten Funktionen auf Gatterebene ausführt.

Zyklusfreie Steuerung oder zyklusfreier Betrieb kann beispielsweise bedeuten, dass der Logikbaustein des Kommunikationsmoduls die Zustände aller an das Kommunikationsmodul angeschlossenen Sensoren parallel ermittelt, anstatt sequentiell, wie dies bei Ausführung des zyklusorientierten Steuerungsprogramms der Fall wäre.

Bei dem in den Logikbaustein geladenen Code kann es sich um einen HDL (Hardware description language)-Code oder um jeden beliebigen, für die Weiterverarbeitung in dem Logikbaustein nutzbaren Code handeln.

Um eine flexible und effiziente Steuerung des Kommunikationssystems zu ermöglichen, übernehmen mehrere Kommunikationsmodule die Systemsteuerung. Hierzu wird das zyklusorientierte Steuerungsprogramm in mehrere Programmteile unterteilt. Die Programmteile des zyklusorientierten Steuerungsprogramms werden dann jeweils in einen von einem Logikbaustein ausführbaren Code umgewandelt. Die Codes der umgewandelten Programmteile werden anschließend jeweils in einen Logikbaustein eines separaten Kommunikationsmoduls geladen. Die Logikbausteine kommunizieren derart miteinander, dass unter Ansprechen auf den jeweiligen Code die umgewandelten Programmteile des zyklusorientierten Steuerungsprogramms zyklusfrei ausgeführt werden können. Bei diesem Ausführungsbeispiel kann das gesamte zyklusorientierte Steuerungsprogramm oder zumindest einige Programmteile davon zyklusfrei von mehreren Kommunikationsmodulen ausgeführt werden. Die Verteilung der umgewandelten Programmteile auf die Logikbausteine der Kommunikationsmodule und die Kommunikation zwischen den Kommunikationsmodulen bzw. Logikbausteinen kann über temporär oder permanent geschaltete Querverbindungen erfolgen. Bei einer dynamisch aufgebauten Querverbindung Verbindung kann der Code in den jeweiligen Logikbausteinen auch im laufenden Betrieb, d. h. "Online" geändert oder ausgetauscht werden. Die Querverbindungen können auch als serielle Verbindungen, beispielsweise mittels Schieberegister ausgeführt sein.

Damit bei einer verteilten Steuerung des Kommunikationssystems ein ordnungsgemäßer Betrieb sichergestellt werden kann, müssen die Logikbausteine zur korrekten Ausführung des jeweiligen Codes synchronisiert werden.

Wird das zyklusorientierte Steuerungsprogramm nicht vollständig in einen oder mehrere Codes umgewandelt, dann wird der nicht umgewandelte Programmteil des zyklusorientierten Steuerungsprogramms von einer speicherprogrammierbaren Steuerungseinrichtung ausgeführt. Die umgewandelten Programmteile werden als Code in einen oder mehrere Logikbausteine geladen. Die speicherprogrammierbare Steuerungseinrichtung und die Logikbausteine, in denen die umgewandelten Programmteile als Code gespeichert sind, arbeiten derart zusammen, dass ein Programmteil des zyklusorientierten Steuerungsprogramms, das umgewandelt worden ist, nur von dem jeweiligen Logikbaustein und nicht von der speicherprogrammierbaren Steuereinrichtung ausgeführt wird. Die korrekte Programmausführung kann von der speicherprogrammierbaren Steuereinrichtung oder zumindest von einem der entsprechenden Logbausteine überwacht und gesteuert werden.

Um die Betriebssteuerung während des laufenden Betriebs ändern zu können, ist der jeweils in einem Logikbaustein gespeicherte Code in Segmente unterteilt. Je nach Implementation können diese Segmente in änderbare und nicht änderbare Segmente unterteilt sein. Soll ein vorbestimmtes Segment ersetzt werden, wird das neue Segment an einen freien Speicherplatz des Logikbaustein geladen oder das zu ersetzende Segment wird überschrieben. Die übrigen, nicht zu ersetzenden Segmente des Codes können weiterhin ausgeführt werden.

Wird das neue Segment, wie erwähnt, separat im Logikbaustein abgelegt, kann der Logikbaustein unter Ansprechen auf ein Freigabesignal das zu ersetzende Segment deaktivieren und das neue Segment in den Code einbinden und aktivieren.

Angemerkt sei, dass nach dem Laden des neuen Segments das zu ersetzende Segment weiter betrieben werden kann. Diese Maßnahme ist insbesondere dann vorteilhaft, wenn beim Testen des neuen Segments ein Fehler auftritt.

Ein vom Logikbaustein bereitgestellter Takt stellt sicher, dass ein Prozessabbild zu einem Zeitpunkt erstellt und die Segmente des geladenen Codes synchron ausgeführt werden.

Erwähnt sei, dass die oben beschriebenen Maßnahmen alle projektierten Funktionen zur Steuerung des Kommunikationssystems auf Gatterebene und nicht wie bei herkömmlichen speicherprogrammierbaren Steuereinrichtungen über ein Betriebssystem ausgeführt werden.

Um einen defekten Logikbaustein in einfacher Weise, d. h. vornehmlich ohne eine zeitaufwendige Rekonfiguration des neuen Logikbausteins, austauschen zu können, wird der im Logikbaustein gespeicherte Code zusätzlich in einer separaten Speichereinrichtung gespeichert. Eine solche Speichereinrichtung kann in jedem Kommunikationsmodul implementiert sein. Alternativ oder ergänzend kann eine externe, zentral angeschlossene Speichereinrichtung vorgesehen sein, die mit allen Kommunikationsmodulen verbunden werden kann und mehrere Codes speichert. Der Code wird unter Ansprechen auf ein vorbestimmtes Ereignis aus der zentralen Speichereinrichtung oder aus der im Kommunikationsmodul implementierten Speichereinrichtung in den neu eingesetzten Logikbaustein automatisch geladen.

Beim Austauschen eines defekten Logikbausteins kann demzufolge entweder lediglich der defekte Logikbaustein aus dem betreffenden Kommunikationsmodul entfernt oder, sofern eine externe Speichereinrichtung vorgesehen ist, das gesamte Kommunikationsmodul ausgetauscht und durch ein neues Modul ersetzt werden.

Das vorgeschlagene Verfahren und Kommunikationsmodul kann auch in Feldbussystemen zum Einsatz kommen. Das Kommunikationsmodul wird hierzu als Busteilnehmer, wie zum Beispiel eine Mastereinrichtung, ein Sensor oder Aktor, konfiguriert, indem in ein weiteres Kommunikationsmodul ein feldbusbezogener Code geladen wird. Der Logikbaustein des weiteren Kommunikationsmoduls kann dann unter Ansprechen auf den feldbusbezogenen Code Funktionen eines Busteilnehmers ausführen.

Die Kommunikationsmodule und Logikbausteine weisen wenigstens eine Ein-/Ausgangsschnittstelle auf, über die Daten ausgetauscht werden können. Eine Programmierschnittstelle dient dazu, den entsprechenden Code in den Logikbaustein des entsprechenden Kommunikationsmoduls zu laden.

Gemäß einer besonderen Ausbildung sind die Kommunikationsmodule derart ausgebildet, dass sie auf einer Klemmschiene, vorzugsweise einer Hutschiene, aufgerastet werden können.

An dieser Stelle sei angemerkt, dass der feldbusbezogene Code auch dazu verwendet werden kann, den Logikbaustein des weiteren Kommunikationsmoduls als Anschlussmodul für Sensoren und/oder Aktoren zu konfigurieren. Wenn in diesem Fall die Ein-/Ausgabeschnittstellen des Kommunikationsmoduls gemäß geeigneten Kommunikationsprotokollen programmiert worden sind, können die an das Kommunikationsmodul angeschlossenen Sensoren und/oder Aktoren mit ihren jeweiligen Kommunikationsprotokollen angesprochen werden.

Das oben genannte technische Problem wird zum anderen durch die Merkmale des Anspruchs 12 gelöst.

Danach ist ein Kommunikationssystem, insbesondere ein Automatisierungssystem, vorgesehen. Das Kommunikationssystem weist wenigstens ein Kommunikationsmodul auf. Das wenigstens eine Kommunikationsmodul enthält einen Logikbaustein, in welchem der Code eines Programmteils eines zyklusorientierten Steuerungsprogramms, welches in einer speicherprogrammierbaren Steuerung zum zyklusorientierten Betrieb des Kommunikationssystems lauffähig ist. Unter Ansprechen auf den Code führt der Logikbaustein den entsprechenden Programmteil des zyklusorientierten Steuerungsprogramms zyklusfrei aus.

Um die Steuerung flexibel und schnell an eine neue Umgebung anpassen zu können, ist das zyklusorientierte

Steuerungsprogramm in mehrere Programmteile unterteilt, die jeweils in einen von einem Logikbaustein ausführbaren Code umgewandelt sind. Die Codes der umgewandelten Programmteile sind jeweils in einem Logikbaustein eines separaten Kommunikationsmodul gespeichert. Diese Kommunikationsmodule sind derart ausgebildet, dass deren Logikbausteine unter Ansprechen auf den jeweiligen Code das dazugehörende umgewandelte Programmteile des zyklusorientierten Steuerungsprogramms zyklusfrei ausführen.

Um die Leistungsfähigkeit des Kommunikationssystems weiter steigern zu können, ist eine speicherprogrammierbare Steuerungseinrichtung vorgesehen, in der das zyklusorientierte Steuerungsprogramm abgespeichert ist. Die Logikbausteine der Kommunikationsmodule arbeiten derart mit der speicherprogrammierbaren Steuerungseinrichtung zusammen, dass die speicherprogrammierbare Steuereinrichtung nur die nicht umgewandelten Programmteile und die Logikbausteine die in entsprechende Codes umgewandelten Programmteile des zyklusorientierten Steuerungsprogramms ausführen. Auf diese Weise können Programmteile des zyklusorientierten Steuerungsprogramms, welche schnell ausgeführt werden können, als Codes auf einen oder mehrere Logikbausteine verteilt und zyklusfrei ausgeführt werden. Programmteil, die langsam ausgeführt werden können oder müssen, werden wie bisher von der speicherprogrammierbaren Steuereinrichtung zyklusorientiert ausgeführt.

Die Erfindung wird nachfolgend anhand einiger Ausführungsbeispiele in Verbindung mit den beiliegenden Zeichnungen näher erläutert. Es zeigen:
- Fig. 1: ein Kommunikationsmodul mit einem Logikbaustein gemäß der Erfindung,
- Fig. 2: einen Ausschnitt eines schematisch dargestellten Kommunikationssystem mit zwei nebeneinander liegenden Kommunikationsmodulen gemäß der Erfindung,
- Fig. 3: ein alternatives Kommunikationssystem mit einer SPS und einem Kommunikationsmodul gemäß Fig. 1.

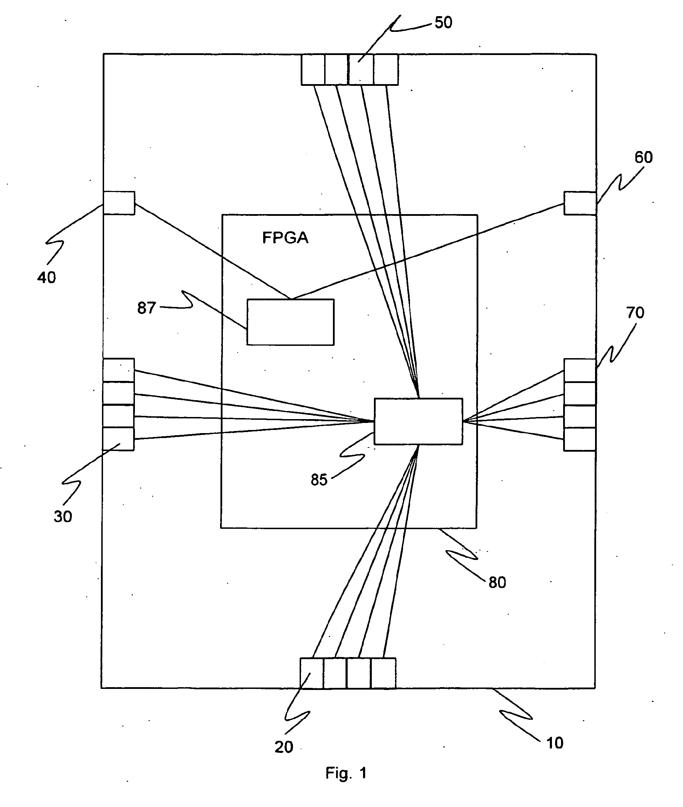

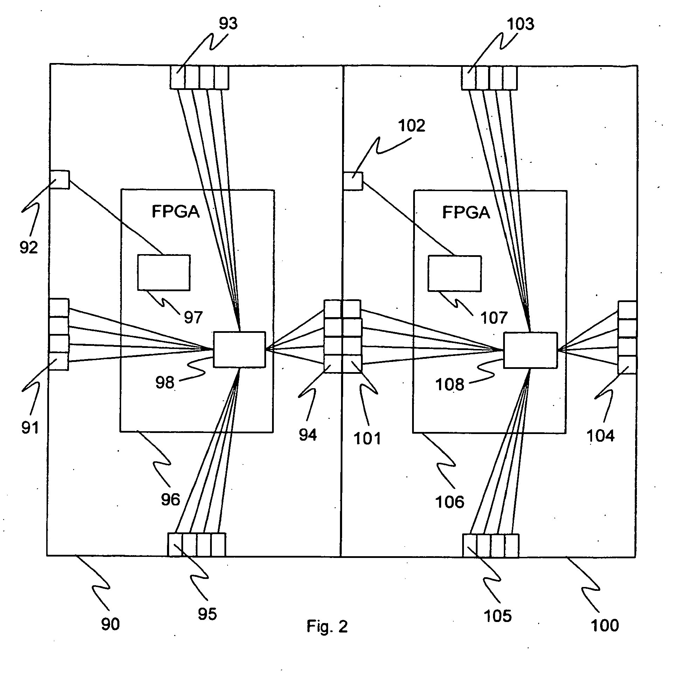

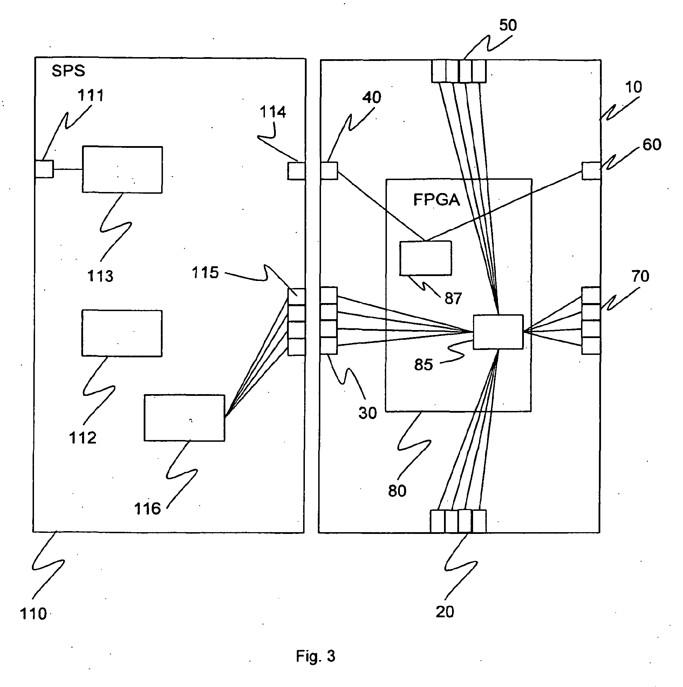

Fig. 1 zeigt ein beispielhaftes Kommunikationsmodul 10, welches als Logikbaustein einen FPGA 80 aufweist. Der FPGA 80 ist symbolisch durch einen Ladespeicher 87 und seine programmierbare Gatterebene 85 dargestellt. Das Kommunikationsmodul 10 weist mehrere Schnittstellen 20, 30, 50 und 70 auf, die als Ausgänge und/oder Eingänge programmiert werden können. über diese Schnittstellen kann das Kommunikationsmodul 10 mit anderen Geräten, zum Beispiel mit weiteren Kommunikationsmodulen, Sensoren oder Aktoren kommunizieren, wie dies beispielsweise in den Fig. 2 und 3 dargestellt ist. Über einen Ein-/Ausgabeport 40 kann der FPGA 80 mittels einer Programmiereinrichtung programmiert, d. h. konfiguriert werden, indem beispielsweise ein Code eines umgewandelten zyklusorientierten Steuerungsprogramms in den Ladespeicher 87 geladen wird. Ein weiterer Ein-/Ausgabeport 60 kann dazu verwendet werden, den Code des umgewandelten zyklusorientierten Steuerungsprogramms in den Logikbaustein eines anderen Kommunikationsmoduls zu laden, oder einen zentralen Takt zu übertragen, der kommunizierende Kommunikationsmodule bzw. deren FPGAs synchronisiert. Dies ist zum Beispiel dann erforderlich, wenn mehrere FPGAs 96 und 106 die Steuerung eines Kommunikationssystems allein übernehmen, wie in Fig. 2 gezeigt, oder wenn wenigstens ein FPGA 80 die Steuerung eines Kommunikationssystems in Verbindung mit einer speicherprogrammierbaren Steuereinrichtung 110, kurz auch SPS genannt, übernimmt, wie in Fig. 3 gezeigt.

In der Regel ist das Kommunikationsmodul 10 Bestandteil eines Automatisierungssystems, welches mehrere Kommunikationsmodule enthält. Fig. 3 zeigt beispielhaft den Ausschnitt eines Kommunikationssystems, welches die SPS 110 und das Kommunikationsmodul 10 enthält. Sowohl die SPS 110 als auch das Kommunikationsmodul 10 können auf einer nicht dargestellten Hutschiene aufgerastet sein.

Gemäß einem ersten Ausführungsbeispiel soll der Betrieb des Kommunikationssystem mittels der SPS und dem FPGA 80 des Kommunikationsmoduls 10 gesteuert werden. Denkbar ist natürlich auch die Einbindung von weiteren Kommunikationsmodulen zur Steuerung des Kommunikationssystems.

Angenommen sei nunmehr, dass ein für eine speicherprogrammierbare Steuereinrichtung 110 erstelltes zyklusorientiertes Steuerungsprogramm verwendet werden soll, um eine zumindest teilweise zyklusfreie, vorzugsweise parallele Steuerung des Kommunikationssystems zu erzielen. Das zyklusorientiert arbeitende Steuerungsprogramm kann in einem Speicher 112 der SPS 110 gespeichert werden und steuert einen Mikroprozessor 116. Das beispielsweise mittels eines IEC 61131-Programmiersystems erstellte zyklusorientierte Steuerungsprogramm wird hierzu zumindest teilweise in einen HDL-Code umgewandelt. Der HDL-Code kann anschließend über den Ein-/Ausgabeport 40 in den Speicher 87 des FPGA 80 geladen werden. Wird der HDL-Code von der SPS 110 bereitgestellt, kann der Code über den Port 114 und den Eingabe-/Ausgabeport 40 zum Kommunikationsmodul 10 übertragen werden. Bereits an dieser Stelle sei erwähnt, dass der HDL-Code zusätzlich in einen zentralen Systemspeicher (nicht dargestellt) oder in einen nicht dargestellten Speicher des Kommunikationsmoduls 10, welcher separat zum FPGA angeordnet ist, abgelegt werden kann. Dadurch kann bei Bedarf der Logikbaustein 80 einfach durch einen funktionsfähigen Logikbaustein ersetzt werden, da der entsprechende HDL-Code automatisch aus dem Systemspeicher oder dem im Kommunikationsmodul implementierten Speicher in den neuen Logikbaustein geladen werden kann. Angemerkt sei, dass der Ladespeicher der jeweiligen FPGAs nicht nur während der Inbetriebnahme (Power Up), sondern auch während des Betriebs aktiviert werden kann.

Der als HDL-Code abgelegte Programmteil des zyklusorientierten Steuerungsprogramms programmiert die Gatterebene 85 des FPGA 80 derart, dass die durch diesen Programmteil definierten Funktionen zyklusfrei ausgeführt werden. Angenommen sei, dass an der beispielsweise als Ausgabeschnittstelle programmierten Schnittstelle 20 Aktoren und an der als Eingabeschnittstelle programmierten Schnittstelle 50 Sensoren angeschaltet sind. In diesem Fall kann der FPGA 80 derart programmiert, sein, dass er unter Ansprechen auf den im Speicher 87 abgelegten HDL-Code über die Ein/Schnittstelle 70 alle Zustände der Sensoren parallel abfragt, in einem weiteren Schritt alle Ausgangsparameter für die an die Schnittstelle 20 angeschlossenen Aktoren berechnet und anschließend parallel die Ausgangsparameter Parameter zu den entsprechenden Aktoren überträgt. Der FPGA 80 ist in diesem Beispiel als Anschlussbaugruppe von Sensoren und/oder Aktoren programmiert, wie sie in Feldbussystemen eingesetzt werden kann.

Alternativ wäre denkbar, dass der HDL-Code, welcher im FPGA 80 abgelegt ist, die Applikationsfunktionen eines Sensors oder eines Aktors ausführt.

Die erläuterte Ausführungsform ermöglicht, dass schnell, vorzugsweise parallel ausführbare Funktionen des zyklusorientierten Steuerungsprogramms nur von dem FPGA 80 des Kommunikationsmoduls 10 und die übrigen Funktionen lediglich von der SPS 110 ausgeführt werden. Die SPS 110 und der FPGA 80 des Kommunikationsmoduls 10 können über eine Schnittstelle 115 der SPS 110 und die Schnittstelle 30 des Kommunikationsmoduls 10 entsprechende Daten, auch. Taktsignale austauschen, um eine ordnungsgemäße Prozesssteuerung ausführen zu können.

Die speicherprogrammierbare Steuereinheit 110 kann ferner beispielsweise über einen Ein-/Ausgabeport 111 mit einem ethernetfähigen Bus verbunden sein (nicht dargestellt). Das entsprechende Kommunikationsprotokoll kann in einer Speichereinrichtung 113 abgelegt werden. Die SPS 110 kann auf diese Weise mit einem übergeordneten Kommunikationssystem verbunden werden.

Bei dem nachfolgend beschriebenen alternativen Ausführungsbeispiel soll der Betrieb des Kommunikationssystem ausschließlich von wenigstens einem FPGA gesteuert werden. Denkbar ist natürlich auch die Einbindung von weiteren Kommunikationsmodulen zur Steuerung des Kommunikationssystems.

Fig. 2 zeigt beispielsweise zwei miteinander verbundene Kommunikationsmodule 90 und 100, die verschiedene Programmteile des zyklusorientierten Steuerungsprogramms zyklusfrei ausführen sollen. Die Kommunikationsmodule 90 und 100 können ähnlich wie das Kommunikationsmodul 10 aufgebaut sein. Wie in Fig. 2 gezeigt, enthält das Kommunikationsmodul 90 einen FPGA 96, der einen Ladespeicher 97 und eine schematisch dargestellte, konfigurierbare Gatterebene 98 aufweist. Das Kommunikationsmodul 100 enthält ebenfalls einen FPGA 106, der einen Ladespeicher 107 und eine schematisch dargestellte, konfigurierbare Gatterebene 108 aufweist.

Angenommen sei, dass das zyklusorientierte Steuerungsprogramms aus zwei Programmteilen besteht. Aus jedem Programmteil wird ein HDL-Code erzeugt. Der eine HDL-Code kann über einen Port 92 des Kommunikationsmoduls 90 in den Speicher 97 und der andere HDL-Code kann über einen Port 102 des Kommunikationsmoduls 100 in den Speicher 107 geladen werden. Die separaten Ports 92 und 102 dienen vornehmlich dazu, Daten, Informationen und HDL-Codes gezielt und unabhängig voneinander in die einzelnen Ladespeicher laden zu können. Die Ports oder Anschlüsse 92 und 102 können aber auch bustechnisch verbunden werden. Denkbar ist auch, dass der für den FPGA 106 bestimmte HDL-Code über eine zwischen dem Port 92 und dem Port 102 beispielsweise temporär aufgebaute Querverbindung (nicht dargestellt) in den Ladespeicher 107 geladen wird. Daten jeglicher Art, auch Taktsignale können zwischen den Kommunikationsmodulen 90 und 100 bzw. deren FPGAs 96 und 106 über Eingabe-/Ausgabeschnittstellen 94 und 101 übertragen werden. Das Taktsignal kann zur synchronen Ausführung der HDL-Codes durch die beiden FPGAs 96 und 106 verwendet werden.

Weiterhin sei angenommen, dass an Schnittstellen 95 des Kommunikationsmoduls 90 Sensoren und an Schnittstelle 105 des Kommunikationsmoduls 100 Aktoren angeschaltet sind. Entsprechend der projektierten Funktionen fragt das FPGA 96 unter Ansprechen auf den gespeicherten HDL-Code den Zustand aller an der Schnittstelle 95 angeschlossenen Sensoren ab und übergibt diese Zustände über die Schnittstellen 94 und 101 dem FPGA 106 des Kommunikationsmoduls 100. Der FPGA 106 ermittelt anschließend unter Ansprechen auf den abgelegten HDL-Code die Ausgangsparameter für die Aktoren und übermittelt diese Parameter parallel an alle angeschlossenen Aktoren.

Dadurch, dass die Betriebssteuerung eines Kommunikationssystems zumindest teilweise auf einen FPGA oder auf mehrere zusammenwirkende FPGAs verteilt wird, können zumindest einige der projektierten Funktionen schneller ausgeführt werden, als wenn die Betriebssteuerung allein durch eine SPS ausgeführt.

Die in Fig. 2 gezeigten Schnittstellen 94 und 101 der Kommunikationsmodule 90 und 100 können beispielsweise mittels der jeweiligen FPGAs 96 und 106 derart programmiert werden, dass ein Datenaustausch zwischen den FPGAs 90 und 106 möglich ist. Auf diese Weise ist es möglich, die in den FPGAs gespeicherten HDL-Codes auch während des Betriebs zu ändern.

Gemäß einer vorteilhaften Weiterbildung kann der im FPGA 80. hinterlegte HDL-Code in mehrere Subcodes, auch Segmente genannt, unterteilt sein, die unabhängig voneinander ausgeführt und geändert werden können. Wenn ein vorbestimmter Subcode des im Speicher 87 hinterlegten HDL-Codes ersetzt werden soll, wird zunächst aus dem zyklusorientierten Steuerungsprogramm, welches aktualisiert worden ist, der entsprechende neue Subcode erzeugt und beispielsweise über den Port 40 in den FPGA 80 geladen. Der zu ersetzende Subcode, welcher im Speicher 87 abgelegt ist, kann sofort überschrieben werden. Alternativ kann der neue Subcode an einem freien Speicherplatz innerhalb des Speichers 87 oder in einem lokalen Speicher des Kommunikationsmoduls 10 abgelegt werden. Bei der letztgenannten Alternative ist der FPGA 80 derart programmiert, dass er unter Ansprechen auf ein vorbestimmtes Ereignis den zu ersetzenden Subcode deaktiviert und den neuen Subcode aktiviert. Auf diese Weise können neu projektierte Funktionen im laufenden Betrieb in den FPGA geladen werden.

## Patentansprüche

1. Verfahren zum Konfigurieren wenigstens zweier jeweils einen Logikbaustein enthaltenden Kommunikationsmodule zur zumindest teilweisen zyklusfreien Steuerung eines Kommunikationssystems, insbesondere eines Automatisierungssystems, mit folgenden Verfahrensschritten:
Erzeugen eines zyklusorientierten Steuerungsprogramms, welches in mehrere Programmteile unterteilt ist und in einer speicherprogrammierbaren Steuerungseinrichtung zum zyklusorientierten Betrieb des Kommunikationssystems lauffähig ist;
Umwandeln mehrerer Programmteile des zyklusorientierten Steuerungsprogramms jeweils in einen von einem Logikbaustein (80, 96, 106) ausführbaren Code;
Laden der Codes der umgewandelten Programmteile jeweils in den Logikbaustein (80, 96, 106) eines separaten Kommunikationsmoduls (10, 90, 100), **dadurch gekennzeichnet, dass** die Logikbausteine (80, 96, 106) dieser Kommunikationsmodule (10, 90, 100) miteinander kommunizieren, um unter Ansprechen auf den jeweiligen Code die umgewandelten Programmteile des zyklusorientierten Steuerungsprogramms zyklusfrei auszuführen, wobei die Logikbausteine der Kommunikationsmodule synchron betrieben werden.

2. Verfahren nach Anspruch 1,
**dadurch gekennzeichnet, dass**
die Logikbausteine (80) mit einer speicherprogrammierbaren Steuerungseinrichtung (110), in welcher das zyklusorientierte Steuerungsprogramm läuft, derart zusammenarbeiten, dass die umgewandelten Programmteile des zyklusorientierten Steuerungsprogramms nur von den jeweiligen Logikbausteinen (80) ausgeführt werden.

3. Verfahren nach einem der vorstehenden Ansprüche,
**dadurch gekennzeichnet, dass**
der in den jeweiligen Logikbaustein (80) geladene Code in Segmente unterteilt ist, und dass ein vorbestimmtes Segment des in dem jeweiligen Logikbaustein gespeicherten Codes durch ein neues Segment ersetzt wird.

4. Verfahren nach Anspruch 3,
**dadurch gekennzeichnet, dass**
der Logikbaustein (80, 96, 106) des jeweiligen Kommunikationsmoduls (10, 90, 100) unter Ansprechen auf ein Freigabesignal das vorbestimmte Segment deaktiviert und das neue Segment aktiviert.

5. Verfahren nach einem der vorstehenden Ansprüche
**dadurch gekennzeichnet, dass**
der Code ein HDL- Code ist.

6. Verfahren nach einem der vorstehenden Ansprüche,
**dadurch gekennzeichnet, dass**
der Code in einer Speichereinrichtung gespeichert wird und unter Ansprechen auf ein vorbestimmtes Ereignis in den jeweiligen Logikbaustein (80, 96, 106) geladen wird.

7. Verfahren nach einem der vorstehenden Ansprüche,
**dadurch gekennzeichnet, dass**
in einen Logikbaustein eines weiteren Kommunikationsmoduls ein feldbusbezogener Code geladen wird, und dass der Logikbaustein des weiteren Kommunikationsmoduls unter Ansprechen auf den feldbusbezogenen Code Funktionen eines Busteilnehmers ausführt.

8. Verfahren nach einem der vorstehenden Ansprüche,
**dadurch gekennzeichnet, dass**
einige der Kommunikationsmodule (10, 90, 100) wenigsten eine Eingabe-/Ausgabeschnittstelle aufweisen, die gemäß einem vorbestimmten Kommunikationsprotokoll programmiert wird, um mit einem Busteilnehmer über das vorbestimmte Kommunikationsprotokoll kommunizieren zu können.

9. Verfahren nach einem der vorstehenden Ansprüche,
**dadurch gekennzeichnet, dass**
die Kommunikationsmodule auf eine Klemmschiene aufgerastet werden und jeweils eine Ein/Ausgabeschnittstelle (94, 101) zum Datenaustausch und eine Schnittstelle zur Programmierung des jeweiligen Logikbausteins aufweisen.

10. Kommunikationssystem, insbesondere ein Automatisierungssystems, mit
wenigstens zwei Kommunikationsmodulen (10), welche jeweils einen Logikbaustein (80) aufweisen, in welchem wenigstens der Code eines Programmteils eines zyklusorientierten Steuerungsprogramms, welches in einer speicherprogrammierbaren Steuerungseinrichtung (110) zum zyklusorientierten Betrieb des Kommunikationssystems lauffähig ist, gespeichert ist, wobei einer der Logikbausteine (80) unter Ansprechen auf den Code den entsprechenden Programmteil des zyklusorientierten Steuerungsprogramms zyklusfrei ausführt, wobei
das zyklusorientierte Steuerungsprogramm in mehrere Programmteile unterteilt ist, die jeweils in eine von einem Logikbaustein ausführbaren Code umgewandelt sind, dass
die Codes der umgewandelten Programmteil jeweils in einem Logikbaustein (96, 106) eines separaten Kommunikationsmoduls (90, 100) gespeichert sind, **dadurch gekennzeichnet,**
**dass** die Kommunikationsmodule derart ausgebildet sind, dass deren Logikbausteine miteinander kommunizieren, um unter Ansprechen auf den jeweiligen Code die umgewandelten Programmteile des zyklusorientierten Steuerungsprogramms zyklusfrei ausführen, und dass
die Logikbausteine der Kommunikationsmodule synchron betrieben werden.

11. Kommunikationssystem nach Anspruch 10,
**gekennzeichnet durch**
eine speicherprogrammierbare Steuerungseinrichtung (110), in der das zyklusorientierte Steuerungsprogramm läuft, wobei
wenigstens der eine Logikbaustein (80) des Kommunikationsmoduls (10) mit der speicherprogrammierbaren Steuerungseinrichtung (110) derart zusammenarbeiten, dass der in den entsprechenden Code umgewandelte Programmteil des zyklusorientierten Steuerungsprogramms nur von dem wenigstens einen Logikbaustein (80) ausgeführt wird.

## Claims

1. Method for configuring at least two communication modules, each containing a logic unit, for the at least partial cycle-free control of a communication system, in particular an automation system, having the following method steps:
generating a cycle-oriented control program which is divided into several program parts and can run in a memory-programmable control device for the cycle-oriented operation of the communication system;
converting several program parts of the cycle-oriented control program in each case into code executable by a logic unit (80, 96, 106);
loading the code of the converted program parts in each case into the logic unit (80, 96, 106) of a separate communication module (10, 90, 100), **characterised in that**
the logic units (80, 96, 106) of these communication modules (10, 90, 100) communicate with each other in order to execute the converted program parts of the cycle-oriented control program in a cycle-free manner in response to the respective code, wherein the logic units of the communication modules are operated in a synchronous manner.

2. Method as claimed in Claim 1, **characterised in that**
the logic units (80) co-operate with a memory-programmable control device (110), in which the cycle-oriented control program is running, such that the converted program parts of the cycle-oriented control program are executed only by the respective logic units (80).

3. Method as claimed in any one of the preceding claims, **characterised in that**
the code loaded into the respective logic unit (80) is divided into segments, and **in that**
a predetermined segment of the code stored in the respective logic unit is replaced by a new segment.

4. Method as claimed in Claim 3, **characterised in that** the logic unit (80, 96, 106) of the respective communication module (10, 90, 100) deactivates the predetermined segment and activates the new segment in response to a release signal.

5. Method as claimed in any one of the preceding claims, **characterised in that** the code is an HDL code.

6. Method as claimed in any one of the preceding claims, **characterised in that** the code is stored in a memory device and is loaded into the respective logic unit (80, 96, 106) in response to a predetermined event.

7. Method as claimed in any one of the preceding claims, **characterised in that** a field bus-related code is loaded into a logic unit of a further communication module, and **in that** the logic unit of the further communication module executes functions of a bus subscriber in response to the field bus-related code.

8. Method as claimed in any one of the preceding claims, **characterised in that** some of the communication modules (10, 90, 100) comprise at least one input/output interface which is programmed in accordance with a predetermined communication protocol in order to be able to communicate with a bus subscriber via the predetermined communication protocol.

9. Method as claimed in any one of the preceding claims, **characterised in that** the communication modules are latched onto a terminal strip and each comprise an input/output interface (94, 101) for data exchange and an interface for programming the respective logic unit.

10. Communication system, in particular an automation system, having at least two communication modules (10) which each comprise a logic unit (80), in which at least the code of one program part of a cycle-oriented control program
- which can run in a memory-programmable control device (110) for the cycle-oriented operation of the communication system - is stored,
wherein one of the logic units (80) executes the corresponding program part of the cycle-oriented control program in a cycle-free manner in response to the code, wherein
the cycle-oriented control program is divided into several program parts which are each converted into a code executable by a logic unit, that the codes of the converted program part are each stored in a logic unit (96, 106) of a separate communication module (90, 100), **characterised in that** the communication modules are formed such that their logic units communicate with each other in order to execute the converted program parts of the cycle-oriented control program in a cycle-free manner in response to the respective code, and **in that**
the logic units of the communication modules are operated in a synchronous manner.

11. Communication system as claimed in Claim 10, **characterised by**
a memory-programmable control device (110) in which the cycle-oriented control program is running, wherein
at least said one logic unit (80) of the communication module (10) co-operates with the memory-programmable control device (110) such that the program part, converted into the corresponding code, of the cycle-oriented control program is executed only by the at least one logic unit (80).

## Revendications

1. Procédé de configuration d'au moins deux modules de communication contenant chacun un composant logique pour la commande au moins partiellement non cyclique d'un système de communication, en particulier d'un système d'automatisation, comportant les étapes de procédé suivantes :
génération d'un programme de commande orienté cycle, lequel est divisé en plusieurs parties de programme et est exécutable dans un dispositif de commande à programme enregistré pour l'exploitation orientée cycle du système de communication ;
conversion de plusieurs parties de programme du programme de commande orienté cycle chacune en un code exécutable par un composant logique (80, 96, 106) ;
chargement des codes des parties de programme converties dans les composants logiques (80, 96, 106) respectifs d'un module de communication (10, 90, 100) séparé, **caractérisé en ce que** les composants logiques (80, 96, 106) desdits modules de communication (10, 90, 100) communiquent entre eux, pour exécuter non cycliquement les parties de programme converties du programme de commande orienté cycle en réaction au code correspondant, les composants logiques des modules de communication étant exploités de manière synchrone.

2. Procédé selon la revendication 1,
**caractérisé en ce que** :
les composants logiques (80) coopèrent avec un dispositif de commande (110) à programme enregistré, dans lequel le programme de commande orienté cycle est exécuté, de telle manière que les parties de programme converties du programme de commande orienté cycle ne sont exécutées que par les composants logiques (80) correspondants.

3. Procédé selon l'une des revendications précédentes,
**caractérisé en ce que** :
le code chargé dans le composant logique (80) correspondant est divisé en segments, et
un segment défini du code mémorisé dans le composant logique correspondant est remplacé par un nouveau segment.

4. Procédé selon la revendication 3,
**caractérisé en ce que** :
le composant logique (80, 96, 106) du module de communication (10, 90, 100) correspondant désactive le segment défini et active le nouveau segment en réaction à un signal d'autorisation.

5. Procédé selon l'une des revendications précédentes,
**caractérisé en ce que** :
le code est un code HDL.

6. Procédé selon l'une des revendications précédentes,
**caractérisé en ce que** :
le code est mémorisé dans un dispositif de mémoire et chargé dans le composant logique (80, 96, 106) correspondant en réaction à un événement défini.

7. Procédé selon l'une des revendications précédentes,
**caractérisé en ce que** :
un code relatif à un bus de terrain est chargé dans un composant logique d'un autre module de communication, et **en ce que** le composant logique de l'autre module de communication exécute des fonctions d'un abonné au bus en réaction au code relatif au bus de terrain.

8. Procédé selon l'une des revendications précédentes,
**caractérisé en ce que** :
quelques-uns des modules de communication (10, 90, 100) comprennent au moins une interface d'entrée/de sortie programmée suivant un protocole de communication défini, pour permettre la communication avec un abonné au bus au moyen du protocole de communication défini.

9. Procédé selon l'une des revendications précédentes,
**caractérisé en ce que** :
les modules de communication sont enclenchés sur une barre de fixation et comportent chacun une interface d'entrée/de sortie (94, 101) pour l'échange de données et une interface pour la programmation du composant logique correspondant.

10. Système de communication, en particulier système d'automatisation, comprenant :
au moins deux modules de communication (10), contenant chacun un composant logique (80), dans lequel est mémorisé au moins le code d'une partie de programme d'un programme de commande orienté cycle exécutable dans un dispositif de commande (110) à programme enregistré pour l'exploitation orientée cycle du système de communication, un des composants logiques (80) exécutant non cycliquement la partie de programme du programme de commande orienté cycle en réaction au code correspondant,
le programme de commande orienté cycle étant divisé en plusieurs parties de programme converties chacune en un code exécutable par un composant logique,
les codes de la partie de programme convertie étant mémorisés chacun dans un composant logique (96, 106) d'un module de communication (90, 100) séparé, **caractérisé en ce que** les modules de communication sont réalisés de telle manière que leurs composants logiques communiquent entre eux, pour exécuter non cycliquement les parties de programme converties du programme de commande orienté cycle en réaction au code correspondant, et **en ce que** les composants logiques des modules de communication sont exploités de manière synchrone.

11. Système de communication selon la revendication 10,
**caractérisé par** :
un dispositif de commande (110) à programme enregistré, dans lequel est exécuté le programme de commande orienté cycle,
au moins le premier composant logique (80) du module de communication (10) coopérant avec le dispositif de commande (110) à programme enregistré de telle manière que la partie de programme du programme de commande orienté cycle convertie en code correspondant ne soit exécutée que par lesdits, au moins un, composants logiques (80).
